(19) **Europäisches Patentamt / European Patent Office / Office européen des brevets**

(11) **EP 4 317 462 A1**

(12) **EUROPEAN PATENT APPLICATION**
published in accordance with Art. 153(4) EPC

(43) Date of publication:
**07.02.2024 Bulletin 2024/06**

(21) Application number: **21935062.6**

(22) Date of filing: **11.05.2021**

(51) International Patent Classification (IPC):
**C21B 5/00** [(2006.01)]

(52) Cooperative Patent Classification (CPC):
**C21B 5/00**

(86) International application number:
**PCT/JP2021/017806**

(87) International publication number:
**WO 2022/208902 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021 JP 2021061042**

(71) Applicant: **KABUSHIKI KAISHA KOBE SEIKO SHO (KOBE STEEL, LTD.)**
**Hyogo 651-8585 (JP)**

(72) Inventors:
• **KASAI, Akito**
  **Kakogawa-shi, Hyogo 675-0137 (JP)**
• **YAKEYA, Masahiro**
  **Kakogawa-shi, Hyogo 675-0137 (JP)**

(74) Representative: **Müller-Boré & Partner**
**Patentanwälte PartG mbB**
**Friedenheimer Brücke 21**
**80639 München (DE)**

(54) **PIG IRON PRODUCTION METHOD**

(57) A method for producing pig iron using a blast furnace with a tuyere according to one aspect of the present invention includes: stacking a first layer containing an iron ore raw material and a second layer containing coke alternately in the blast furnace; and charging the coke to a central portion of the blast furnace; and reducing and melting the iron ore raw material in the stacked first layer while injecting an auxiliary reductant into the blast furnace by hot air blown from the tuyere, in which: in the stacking, the charging of the coke is carried out once or a plurality of times during one charge of stacking a stacking unit composed of one of the first layer and one of the second layer; and a ratio R of a mass (ton/ch) of the coke accumulated in the central portion to a mass (ton/ch) of the iron ore material charged in the one charge is greater than or equal to a predetermined value $\alpha$.

FIG. 1

```
                    ┌─────────┐
                    │  START  │
                    └────┬────┘
            ┌────────────┴────────────┐
            ▼                         ▼
  ┌──────────────────┐      ┌──────────────────────┐
S1│  STACKING STEP   │    S2│  CENTRAL PORTION     │
  └────────┬─────────┘      │  CHARGING STEP       │
           │                └──────────┬───────────┘
           └────────────┬──────────────┘
                        ▼
         ┌──────────────────────────┐
       S3│  REDUCING/MELTING STEP   │
         └────────────┬─────────────┘
                      ▼
                 ┌─────────┐
                 │   END   │
                 └─────────┘
```

**EP 4 317 462 A1**

**Description**

[TECHNICAL FIELD]

The present invention relates to a method for producing pig iron.

[BACKGROUND ART]

A method for producing pig iron through alternately stacking a first layer containing an iron ore material and a second layer containing coke alternately in a blast furnace, and reducing and melting the iron ore material while injecting an auxiliary reductant into the blast furnace by hot air blown from a tuyere is known. During this, the coke serves as a heat source for melting the iron ore material, a reducing agent for the iron ore material, a recarburizing agent for carburizing the molten iron to lower the melting point, and a spacer for ensuring gas permeability in the blast furnace. Due to the coke ensuring gas permeability, descent of the burden charged as the first layer and the second layer is stabilized, and in turn, stable operation of the blast furnace is enabled.

Hot air is blown into a blast furnace generally from an outer periphery of the blast furnace. The hot air that has reached the central portion of the blast furnace goes up in the central portion of the blast furnace. Interrupting a flow of the hot air going up in the central portion is likely to lower gas permeability. As a method for ensuring gas permeability in the central portion, a method of charging coke intensively in the central portion of a blast furnace has been proposed (for example, Japanese Unexamined Patent Application Publication No. S60-56003).

[PRIOR ART DOCUMENTS]

[PATENT DOCUMENTS]

Patent Document 1: Japanese Unexamined Patent Application Publication No. S60-56003

[SUMMARY OF THE INVENTION]

[PROBLEMS TO BE SOLVED BY THE INVENTION]

In light of a recent requirement for a decrease in $CO_2$ emission, a further decrease in the amount of coke used in the blast furnace operation is demanded. The aforementioned method of charging coke intensively in the central portion of a blast furnace improves gas permeability; however, a method of maintaining gas permeability with a further decreased amount of coke is desired.

The present invention was made in view of the foregoing circumstances, and an objective thereof is to provide a method for producing pig iron enabling a further decrease in the amount of the coke used while ensuring a flow of hot air in the central portion of the blast furnace.

[MEANS FOR SOLVING THE PROBLEMS]

A method for producing pig iron using a blast furnace with a tuyere according to one aspect of the present invention includes: stacking a first layer containing an iron ore material and a second layer containing coke alternately in the blast furnace; and charging the coke to a central portion of the blast furnace; and reducing and melting the iron ore material in the stacked first layer while injecting an auxiliary reductant into the blast furnace by hot air blown from the tuyere, in which: in the stacking, the charging of the coke is carried out once or a plurality of times during one charge of stacking a stacking unit composed of one of the first layer and one of the second layer; and a ratio R of a mass (ton/ch) of the coke accumulated in the central portion to a mass (ton/ch) of the iron ore material charged in the one charge is greater than or equal to a predetermined value $\alpha$.

In the present method for producing pig iron, coke is charged in the central portion of the blast furnace in one charge of stacking a stacking unit composed of the first layer and the second layer in the stacking, whereby the flow of hot air in the central portion of the blast furnace is easily ensured. In addition, the ratio R of a mass (ton/ch) of the coke accumulated in the central portion to a mass (ton/ch) of the iron ore material charged in the one charge is greater than or equal to the predetermined value $\alpha$, whereby the gas permeability of the hot air is improved. Consequently, the necessary gas permeability can be ensured even when the amount of the coke used is decreased, and a further decrease in the amount of the coke is thus enabled.

It is preferred that the predetermined value $\alpha$ is 0.017. Due to the predetermined value $\alpha$ being the aforementioned value, the gas permeability can easily be ensured.

It is preferred that the iron ore material in the first layer includes iron ore pellets, and when a proportion of the iron ore pellets in the iron ore material in the first layer is P (% by mass), the predetermined value $\alpha$ is calculated by following equation 1. The necessary amount of the coke charged in the central portion may vary depending on an ore inclined angle in the first layer. Especially because the proportion P of the iron ore pellets in the first layer and the ore inclined angle in the first layer are in a certain correlation, determining the predetermined value $\alpha$ in consideration of the proportion P of the iron ore pellets in the first layer enables the gas permeability improvement effect to be produced highly accurately.

$$\alpha = 0.017 \times (0.001 \times P + 0.97) \ldots 1.$$

It is preferred that strength of the coke accumulated in the central portion is greater than or equal to strength of the coke included in the second layer. In light of the gas permeability, greater strength of the coke is preferred; however, coke having great strength is generally expensive, leading to an increased production cost. Therefore, using the coke having great strength only for charging the center, improvement in gas permeability is enabled while an increase in the production cost is suppressed.

It is preferred that an average grain size of the coke accumulated in the central portion is greater than or equal to an average grain size of the coke included in the second layer. In light of the gas permeability, greater average grain size of the coke is preferred; however, coke having a greater average grain size is generally expensive, leading to an increased production cost. Therefore, using the coke having a great average grain size only for center charging, improvement in gas permeability is enabled while an increase in the production cost is suppressed.

It is preferred that the method for producing pig iron further includes: inputting, as training data, actual values of an input data group comprising at least a temperature and a volume of the hot air, a solution loss reaction amount, a furnace wall heat removal amount, a remaining pig iron amount, a temperature of molten iron, and the ratio R in a predetermined period between a time prior to a reference time and the reference time, and of an output data group comprising temperature data of molten iron obtained in the reducing and melting at a time posterior to the reference time, and training an artificial intelligence model to predict temperature data of the molten iron at a time posterior to the reference time from the input data group; obtaining the input data group with a current time as the reference time; inputting the input data group obtained in the obtaining to the trained artificial intelligence model with the current time as the reference time; and causing the trained artificial intelligence model to estimate a future temperature of the molten iron, in which the input data group obtained in the obtaining, and actual values of the output data group corresponding to the input data group are used for input in the training. Due to thus estimating the temperature of the molten iron by using the trained artificial intelligence model, and additionally training using the input data group obtained in the obtaining and the actual values of the output data group corresponding to the input data group, the temperature of the molten iron can be managed with high accuracy on the basis of the ratio R.

As used herein, the "central portion" of the blast furnace refers to a region at a distance of no greater than 0.2Z from the central axis of the blast furnace, Z being a radius of a furnace throat portion. The "strength" of the coke refers to the drum strength defined in JIS-K-2151:2004. Meanwhile, "average grain size" means an arithmetic average diameter.

[EFFECTS OF THE INVENTION]

As described above, by employing the method for producing pig iron according to the present invention, a further decrease in the amount of the coke used is enabled while a flow of hot air in the central portion of the blast furnace is ensured.

[BRIEF DESCRIPTION OF THE DRAWINGS]

FIG. 1 is a flow diagram illustrating the method for producing pig iron according to an embodiment of the present invention.
FIG. 2 is a schematic view illustrating the inside of the blast furnace used in the method for producing pig iron in FIG. 1.
FIG. 3 is a schematic partial enlarged view of the vicinity of an area from a cohesive zone to a dripping zone in FIG. 2.
FIG. 4 is a graph showing a relationship between a ratio R and a corrected K value in EXAMPLES.
FIG. 5 is a graph showing a relationship between a coke rate and a K value in EXAMPLES.
FIG. 6 is a schematic view illustrating a configuration of a blast furnace burden distribution test device used in EXAMPLES.
FIG. 7 is a graph showing a relationship between a proportion P of the iron ore pellets (proportion of alumina balls) and an ore inclined angle θ in EXAMPLES.
FIG. 8 is a graph showing a relationship between a coke rate and a K value in EXAMPLES, classified by the proportion P of the iron ore pellets.

[DESCRIPTION OF EMBODIMENT]

Hereinafter, the method for producing pig iron according to each embodiment of the present invention will be described.

First Embodiment

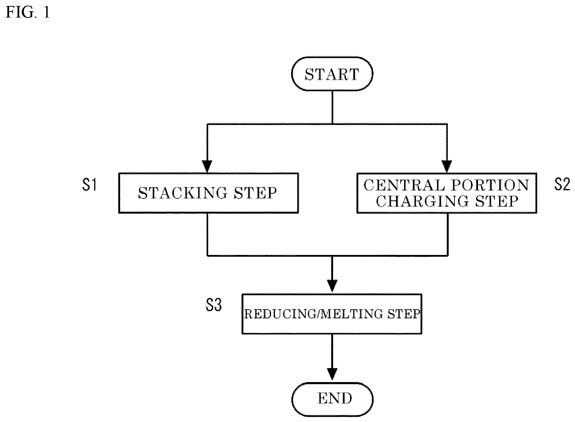

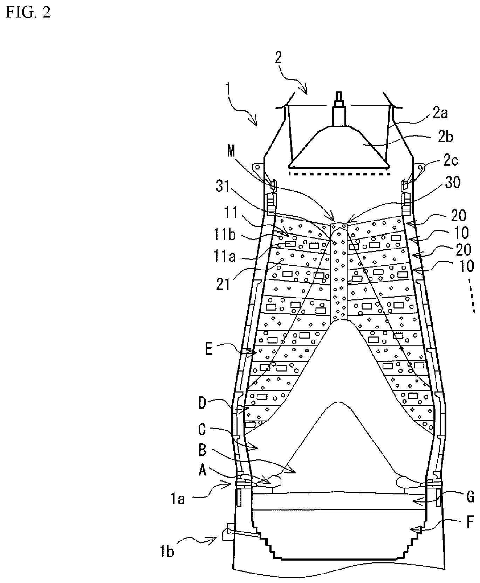

The method for producing pig iron illustrated in FIG. 1 uses a blast furnace 1 illustrated in FIG. 2, and includes a stacking step S1, a central portion charging step S2, and a reducing/melting step S3.

Blast Furnace

The blast furnace 1 includes a tuyere 1a and a taphole 1b provided in a furnace lower portion as illustrated in FIG. 2. Typically, a plurality of tuyeres 1a are provided. The blast furnace 1 is a solid-gas countercurrent type shaft furnace that enables hot air, which is high temperature air with high-temperature or normal-temperature oxygen being added as needed, to be blown from the tuyere 1a into the furnace, a series of reactions such as reduction and melting of an iron ore material 11 described later to take place, and pig iron to be tapped from the taphole 1b. In addition, the blast furnace 1 is equipped with a bell-armor type raw material charging device 2. The raw material charging device 2 will be described later.

Stacking Step

In the stacking step S1, a first layer 10 and a second layer 20 are alternately stacked in the blast furnace 1 as illustrated in FIG. 2. In other words, the numbers of the first layers 10 and the second layers 20 are at least two, respectively.

(First Layer)

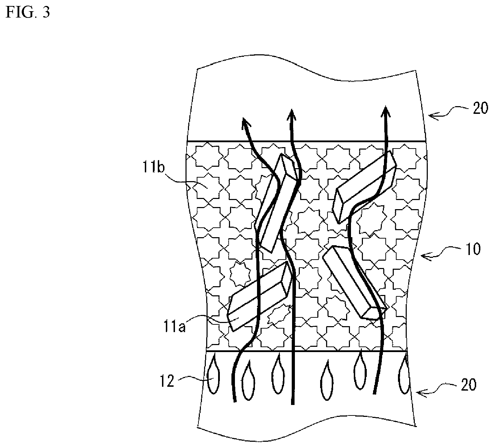

The first layer 10 contains the iron ore material 11. In the reducing/melting step S3, the iron ore material 11 is heated and reduced into molten iron by the hot air blown from the tuyere 1a.
The iron ore material 11 refers to mineral ore serving as an iron raw material, and contains principally iron ore. The iron ore material 11 is exemplified by calcined iron ore (iron ore pellets, sintered iron ore), lump iron ore, carbon composite agglomerated iron ore, metal, and the like. In addition, it is preferred that an aggregate 11a is contained in the iron ore material 11. Hereinafter, a case in which the iron ore material 11 contains the aggregate 11a is described; however, the aggregate 11a is not an essential constitutive element and the iron ore material 11 may not contain the aggregate 11a.
The aggregate 11a is for improving gas permeability in a cohesive zone D described later, whereby the hot air is permeated to the central portion of the blast furnace 1. It is preferred that the aggregate 11a contains a reduced iron molded product (hot briquette iron: HBI) obtained through compression molding of reduced iron.
The HBI is obtained by molding direct reduced iron (DRI) in a hot state. The DRI is high in porosity and has a drawback of oxidization and heat generation during marine transportation and outdoor storage, while the HBI is low in porosity and not likely to be re-oxidized. After serving to ensure gas permeability in the first layer 10, the aggregate 11a functions as a metal and becomes molten iron. Since the aggregate 11a is high in metallization rate and requires no reduction, at the time of becoming the molten iron, a reduction agent is not required in a large amount. $CO_2$ emission can thus be decreased. Note that the "metallization rate" refers to a proportion [% by mass] of metallic iron to the total iron content.
The lower limit of a charged rate of the reduced iron molded product is 100 kg and more preferably 150 kg per 1 ton of the pig iron. When the charged rate of the reduced iron molded product is less than the lower limit, the function of the aggregate 11a ensuring gas permeability in the cohesive zone D in the reducing/melting step S3 may not be sufficiently exerted. On the other hand, the upper limit of the charged rate of the reduced iron molded product is defined as appropriate in such a range that the aggregate is not excessive and does not diminish the effect of the aggregate, and is, for example, 700 kg per 1 ton of the pig iron.
The lower limit of a ratio of an average grain size of the reduced iron molded product to an average grain size of the iron ore material 11b excluding the aggregate 11a is preferably 1.3, and more preferably 1.4. As illustrated in FIG. 3, even when a part of the iron ore material 11b excluding the aggregate 11a in the first layer 10 is molten and moves to the lower side of the blast furnace 1 as a dripping slag 12 and the iron ore material 11b excluding the aggregate 11a is softened and shrunk, the reduced iron molded product having a high melting point is not softened. Blending the reduced iron molded product, which is larger than the iron ore material 11b excluding the aggregate 11a to at least a certain degree, as the aggregate 11a facilitates the exertion of the aggregate effect of the reduced iron molded product and enables suppression of layer shrinkage of the entire first layer 10. Consequently, due to the ratio of the average grain sizes being greater than or equal to the lower limit, a channel of the hot air shown by an arrow in FIG. 3 can be secured, whereby gas permeability in the reducing/melting step S3 can be improved. Meanwhile, the upper limit of the average grain size is preferably 10 and more preferably 5. When the ratio of the average grain sizes is greater than the upper limit, it may be difficult to blend the reduced iron molded product uniformly into the first layer 10, leading to an increase in segregation.

In addition, when the reduced iron molded product contains aluminum oxide, the upper limit of the content of the aluminum oxide in the reduced iron molded product is preferably 1.5% by mass and more preferably 1.3% by mass. When the content of the aluminum oxide is greater than the upper limit, it may be difficult to ensure gas permeability in the furnace lower portion due to increases in the melting point and the viscosity of the slag. Consequently, by configuring the content of aluminum oxide in the reduced iron molded product to be less than or equal to the upper limit, an increase in the amount of the coke 21 used can be inhibited. Note that the content of the aluminum oxide may be 0% by mass, in other words the reduced iron molded product may not contain the aluminum oxide, but the lower limit of the content of the aluminum oxide is preferably 0.5% by mass. When the content of the aluminum oxide is less than the lower limit, the reduced iron molded product becomes expensive, and the production cost of the pig iron may be increased.

In addition to the iron ore material 11, auxiliary materials such as limestone, dolomite, and silica may also be charged into the first layer 10. Furthermore, in the first layer 10, undersize small-grain coke obtained by sifting the coke is generally used in mixture, in addition to the iron ore material 11.

(Second Layer)

The second layer 20 contains coke 21.

The coke 21 serves: as a heat source for melting the iron ore material 11; to generate CO gas as a reducing agent necessary for reduction of the iron ore material 11; as a recarburizing agent for carburizing the molten iron to lower the melting point; and as a spacer for ensuring gas permeability in the blast furnace 1.

(Stacking Method)

Various methods can be used as a method for alternately stacking the first layer 10 and the second layer 20. The method is described herein with reference to, as an example, the blast furnace 1 equipped with a bell-armor type raw material charging device 2 (hereinafter, may be also merely referred to as "raw material charging device 2") illustrated in FIG. 2.

The raw material charging device 2 is provided in a furnace top portion. In other words, the first layer 10 and the second layer 20 are charged from the furnace top. The raw material charging device 2 includes, as illustrated in FIG. 2, a bell cup 2a, a lower bell 2b, and an armor 2c.

In the bell cup 2a, the raw material to be charged is loaded. When the first layer 10 is charged, the raw material constituting the first layer 10 is loaded to the bell cup 2a, and when the second layer 20 is charged, the raw material constituting the second layer 20 is loaded to the bell cup 2a.

The lower bell 2b is in a cone shape expanding downward, and is provided inside the bell cup 2a. The lower bell 2b is vertically movable (FIG. 2 shows an upward moved state with a solid line, and a downward moved state with a dotted line). The lower bell 2b is configured to seal a lower portion of the bell cup 2a when moved upward, and to form a gap on an extended line of a lateral wall of the bell cup 2a when moved downward.

The armor 2c is provided on a lower side with respect to the lower bell 2b, in a furnace wall portion of the blast furnace 1. When the lower bell 2b is moved downward, the raw material falls from the gap, while the armor 2c serves as a rebound plate for rebounding the fallen raw material. In addition, the armor 2c is configured to be protrudable and retractable with respect to a center of the blast furnace 1.

By using the raw material charging device 2, the first layer 10 can be stacked as follows. Note that the same applies to the second layer 20. In addition, the first layer 10 and the second layer 20 are alternately stacked.

First, the lower bell 2b is positioned on the upper side and the raw material of the first layer 10 is charged into the bell cup 2a. When the lower bell 2b is positioned on the upper side, the lower portion of the bell cup 2a is sealed, whereby the raw material is loaded in the bell cup 2a. Note that the loaded amount is an amount of each layer to be stacked. In a case in which a capacity of the bell cup 2a is smaller than a stacking amount of each layer, the first layer 10 can be stacked in a plurality of installments. The stacking with a single load may be also referred to as a "batch".

Next, the lower bell 2b is moved downward. As a result, a gap is generated from the bell cup 2a, and the raw material falls through the gap in the furnace wall direction to hit the armor 2c. The raw material that has hit and been rebounded by the armor 2c is charged into the furnace. The raw material falls while moving toward the furnace interior due to the rebound at the armor 2c, and is accumulated while flowing from the fallen position toward the central side of the furnace interior. Since the armor 2c is configured to be protrudable and retractable with respect to the inside of the blast furnace, the fallen position of the raw material can be adjusted by protruding and retracting the armor 2c. This adjustment enables the first layer 10 to be accumulated in a desired shape.

Central Portion Charging Step

In the central portion charging step S2, the coke 31 is charged to the central portion M of the blast furnace 1. Charging of the coke 31 forms a center charged column 30 as illustrated in FIG. 2. Note that, not only the coke 31 but also, for example, a small amount of iron ore material and the like may be charged in mixture to the central portion M.
The central portion charging step S2 (the charging) is carried out once or a plurality of times during one charge of stacking a stacking unit composed of one of the first layer 10 and one of the second layer 20 in the stacking step S1. As used herein, one charge refers to one cycle of stacking one of the first layer 10 and one of the second layer 20. For example, in a case of two-batch processing of the first layer 10 and the second layer 20, one charge consists of processing in the four batches of: of a first batch of the first layer 10, a second batch of the first layer 10, a first batch of the second layer 20, and a second batch of the second layer 20.
The order of carrying out the central portion charging step S2 in one charge may be determined as appropriate according to various conditions. For example, the central portion charging step S2 may be either carried out as a first step of one charge, or carried out in two installments immediately before stacking the first layer 10 and the second layer 20. Alternatively, in a case of two-batch processing of the first layer 10 and the second layer 20, the central portion charging step S2 may be carried out in two installments between the first batch of the first layer 10 and the second batch of the first layer 10, and between the second batch of the second layer 20 and the first batch of the first layer 10.

(Coke)

The coke 31 may have either the same characteristics as, or different characteristics from, the coke 21 in the second layer 20. When using the coke 31 having the different characteristics, it is preferred that strength of the coke 31 accumulated in the central portion M is greater than or equal to strength of the coke 21 included in the second layer 20. In light of the gas permeability, greater strength of the coke is preferred; however, coke having great strength is generally expensive, leading to an increased production cost. Therefore, using the coke having great strength principally for center charging, improvement in gas permeability is enabled while an increase in the production cost is suppressed. Note that "the coke accumulated in the central portion" is the coke charged principally in the central portion charging step S2; however, for example when coke is accumulated in the central portion by a rolling motion and the like during stacking of the second layer, the coke is included as the coke accumulated in the central portion. In other words, "the coke accumulated in the central portion" refers to the coke accumulated in the central portion after the charging of one charge, regardless of the origin thereof. Here, the strength of the coke 31 accumulated in the central portion M being greater than or equal to strength of the coke 21 included in the second layer 20 is equivalent to the strength of the coke 31 charged in the central portion charging step being greater than the coke 21 included in the second layer 20. In the case in which the coke 21 in the second layer 20 is accumulated in the central portion M by the rolling motion and the like, the coke may be considered to have the same strength as the coke 21 in the second layer 20.
It is preferred that an average grain size of the coke 31 accumulated in the central portion M is greater than or equal to an average grain size of the coke 21 included in the second layer 20. In light of the gas permeability, greater average grain size of the coke is preferred; however, coke having a greater average grain size is generally expensive, leading to an increased production cost. Therefore, by using the coke having a greater average grain size than the coke used in the stacking step S1 principally in the central portion charging step S2, improvement in gas permeability is enabled while an increase in the production cost is suppressed.
Note that it is particularly preferred that the strength of the coke 31 accumulated in the central portion M is greater than or equal to the strength of the coke 21 contained in the second layer 20, and the average grain size of the coke 31 accumulated in the central portion M is greater than or equal to the average grain size of the coke 21 included in the second layer 20.

(Stacking Method)

Stacking of the center charged column 30 can be carried out by various methods, and is not particularly limited as long as the ratio R described later can be greater than or equal to the predetermined value $\alpha$, and for example, may be carried out by using the bell-armor type raw material charging device 2 in a similar manner to the first layer 10 and the second layer 20. Specifically, it is preferred to stack a part of the center charged column 30 (a thickness corresponding to the thickness of the first layer 10 or the second layer 20 to be stacked immediately thereafter) in the central portion of the blast furnace 1 by using the raw material charging device 2.

In the present method for producing pig iron, the ratio R of a mass (ton/ch) of the coke 31 accumulated in the central portion M to a mass (ton/ch) of the iron ore material 11 charged in the one charge is greater than or equal to the predetermined value $\alpha$. Note that for example in the case in which the central portion charging step S2 is carried out for a plurality of times in one charge, the ratio R refers to a ratio of the total amount of the coke 31 to the total amount of the iron ore material 11 charged in one charge. In addition, the "mass of the iron ore material charged" is principally the iron ore material 11 in the first layer 10 charged in the stacking step S1; however, when another layer includes the iron ore material, the iron ore material is included therein. In other words, "mass of the iron ore material charged" is the total mass of the iron ore material charged in one charge, regardless of the origin thereof.

The predetermined value $\alpha$ may be 0.017. Due to the predetermined value $\alpha$ being the aforementioned value, the gas permeability can easily be ensured.

In a case in which the iron ore material 11 in the first layer 10 contains the iron ore pellets, the predetermined value $\alpha$ may be 0.017; however, it is preferred that the predetermined value $\alpha$ is calculated by the following equation 1 where a proportion of the iron ore pellets in the iron ore material 11 in the first layer 10 is represented by P (% by mass). As used herein, the "iron ore pellets" are made by using iron ore fine powder of several tens of $\mu$m, and by improving quality to have characteristics (for example, size, strength, reducibility) suitable for the blast furnace.

$$\alpha = 0.017 \times (0.001 \times P + 0.97) \dots 1.$$

For improvement of the gas permeability, it is desirable that a central column is formed by the coke 31 in the central portion M of the blast furnace 1. In other words, it is preferred to charge the coke 31 in the central portion charging step S2 such that the central column is higher than a thickness of the first layer 10 in the vicinity of the center defined by a mass of the iron ore material 11 charged in one charge and the ore inclined angle, that is, the coke 31 in the central portion M protrudes from the first layer 10. Note that the "ore inclined angle" refers to an angle of an inclined face of an iron ore deposition layer (such as the first layer 10) from the horizon.

The first layer 10 is generally stacked to be inclined such that the central portion M is low. Here, the sintered ore and the lump ore have irregular shapes and have comparatively broad grain size distributions, whereas the iron ore pellets has a spherical shape and has a comparatively uniform grain size. Consequently, the iron ore pellets are more likely than the sintered ore and the lump ore to roll toward the central portion M. Increasing the proportion of the iron ore pellets is likely to lower the ore inclined angle. At this time, the first layer 10 tends to be flattened and the central portion M becomes relatively thick. Accordingly, when the proportion of the iron ore pellets is increased, it is preferred that the proportion of the coke 31 (ton/ch) charged to the center is increased with respect to the iron ore material 11 (ton/ch) in the first layer 10, to relatively increase the coke 31. The present inventors have studied a correlation between the proportion P of the iron ore pellets in the first layer 10 and the ore inclined angle in the first layer 10 and concluded that determining the predetermined value $\alpha$ by the aforementioned formula 1 in consideration of the proportion P of the iron ore pellets in the first layer 10 enables the gas permeability improvement effect to be produced highly accurately.

<Reducing/Melting Step>

In the reducing/melting step S3, the iron ore material 11 in the stacked first layer 10 is reduced and melted while an auxiliary reductant is injected into the blast furnace by hot air blown from the tuyere 1a. Note that the operation of the blast furnace is continuous, and thus the reducing/melting step S3 is carried out continuously. On the other hand, the stacking step S1 and central portion charging step S2 are carried out intermittently, and the first layer 10, the second layer 20, and the center charged column 30 to be processed in the reducing/melting step S3 are added according to the circumstances of the reduction and melting process of the first layer 10 and the second layer 20 in the reducing/melting step S3.

FIG. 2 illustrates a state in the reducing/melting step S3. As illustrated in FIG. 2, a raceway A, which is a hollow portion in which the coke 21 whirls and is present in an extremely sparse state, is formed in the vicinity of the tuyere 1a due to the hot air from the tuyere 1a. In the blast furnace 1, the temperature in the raceway A is the highest, being about 2,000 °C. A deadman B, which is an aggregation-stagnation zone of the coke inside the blast furnace 1, is present adjacent to the raceway A. In addition, the dripping zone C, the cohesive zone D, and the lumpy zone E are present in an upward direction in this order from the deadman B.

The temperature in the blast furnace 1 increases from a top portion toward the raceway A. In other words, the temperature increases in the order of the lumpy zone E, the cohesive zone D, and the dripping zone C. For example, the temperature of the lumpy zone E is about greater than or equal to 20 °C and less than or equal to 1,200 °C, while the temperature of the deadman B is about greater than or equal to 1,200 °C and less than or equal to 1,600 °C. Note that the temperature of the deadman B varies in the radial direction, and the temperature of a central portion of the deadman B may be lower than the temperature of the dripping zone C. In addition, by stably circulating the hot air in the central portion M in the furnace, the cohesive zone D having an inverted V-shaped cross section is formed, whereby gas permeability and reducibility are ensured in the furnace.

In the blast furnace 1, the iron ore material 11 is first heated and reduced in the lumpy zone E. In the cohesive zone D, the iron ore reduced in the lumpy zone E is softened and shrunk. The softened and shrunk iron ore falls as the dripping slag, and moves to the dripping zone C. In the reducing/melting step S3, reduction of the iron ore material 11 proceeds principally in the lumpy zone E, while melting of the iron ore material 11 proceeds principally in the dripping zone C. Note that in the dripping zone C and the deadman B, direct reduction proceeds, which is a direct reaction between the fallen liquid iron oxide FeO and carbon in the coke 21.

The aggregate 11a containing the reduced iron molded product exerts the aggregate effect in the cohesive zone D. In other words, even in a state in which the iron ore has been softened and shrunk, the reduced iron molded product having a high melting point is not softened, and secures a gas permeation channel ensuring permeation of the hot air to the central portion of the blast furnace 1.

In addition, the molten iron F obtained by melting the reduced iron is accumulated on a hearth portion, and a molten slag G is accumulated on the molten iron F. The molten iron F and the molten slag G can be tapped from the taphole 1b.

The auxiliary reductant to be injected from the tuyere 1a is exemplified by finely pulverized coal obtained by finely pulverizing coal to have a grain size of about 50 $\mu$m, heavy oil, natural gas, and the like. The auxiliary reductant serves as a heat source, a reduction agent, and a recarburizing agent. In other words, of the roles played by the coke 21, the roles other than the spacer are substituted by the auxiliary reductant.

<Advantages>

In the present method for producing pig iron, the coke 31 is charged in the central portion M of the blast furnace 1 in one charge of stacking a stacking unit composed of the first layer 10 and the second layer 20 in the stacking step S1, whereby the flow of hot air in the central portion M of the blast furnace 1 is easily ensured. In addition, the ratio R of the mass (ton/ch) of the coke 31 accumulated in the central portion M to the mass (ton/ch) of the iron ore material 11 in the one charge is greater than or equal to the predetermined value $\alpha$, whereby the gas permeability of the hot air is improved. Consequently, the necessary gas permeability can be ensured even when the amount of the coke used is decreased, and a further decrease in the amount of the coke is thus enabled.

Second Embodiment

A method for producing pig iron according to another embodiment of the present invention using a blast furnace 1 with the tuyere 1a includes: a step (stacking step) of stacking the first layer 10 containing the iron ore raw material 11 and the second layer 20 containing the coke 21 alternately in the blast furnace 1; a step (central portion charging step) of charging the coke 31 to the central portion M of the blast furnace 1; and a step (reducing/melting step) of reducing and melting the iron ore raw material 11 in the stacked first layer 10 while injecting an auxiliary fuel into the blast furnace 1 by hot air blown from the tuyere 1a, in which: in the stacking step, the central portion charging step is carried out once or a plurality of times during one charge of stacking a stacking unit composed of one of the first 10 layer and one of the second layer; and the ratio R of a mass (ton/ch) of the coke 31 accumulated in the central portion M to a mass (ton/ch) of the iron ore material in the one charge is greater than or equal to a predetermined value $\alpha$. In addition, the method for producing pig iron includes a training step, an obtaining step, an input step, an estimate step, and a control step.

The stacking step, the central portion charging step, and the reducing/melting step are similar to the stacking step S 1, the central portion charging step S2, and the reducing/melting step S3 according to the first embodiment, and detailed description thereof is omitted.

(Training Step)

The training step involves inputting, as training data, actual values of an input data group including at least a temperature and a volume of the hot air, a furnace wall heat removal amount which is an amount of heat dissipated from the furnace wall, a solution loss reaction amount which is an amount of heat due to a solution loss reaction, a remaining pig iron amount, a temperature of molten iron F, and the ratio R in a predetermined period between a time prior to a reference time and the reference time, and of an output data group comprising temperature data of molten iron F obtained in the reducing and melting at a time posterior to the reference time, and training an artificial intelligence model to predict temperature data of the molten iron F at a time posterior to the reference time from the input data group.

In light of improvement of prediction accuracy, it is preferred that the input data group includes, in addition to the temperature of the hot air and the temperature of the molten iron F, moisture of the hot air, a coke rate, an auxiliary reductant rate (when the auxiliary reductant contains coal fine powder, coal fine powder rate is preferred), and the like.

In the training step, the reference time is a certain time in the past, and the time prior to the reference time may be any point of time prior to the reference time. Meanwhile, the time posterior to the reference time is a time prior to at least the current time. Accordingly, values of the input data group and the output data group can all be actually measured values. In addition, the reference time may be changed with respect to a series of time-series data from the time prior to the time posterior, in other words the time dividing the past data and the future data may be changed.

In addition, it is preferred that the input data group includes also data of the time posterior to the reference time (and prior to the current time). The temperature of the molten iron F posterior to the reference time, that is to be predicted, may be changed by especially intentional control of the input data group posterior to the reference time. Given this, by using also these pieces of data for training of the artificial intelligence model, a highly accurate prediction model can be created.

The input data group and the output data group may be obtained by a sensor or the like installed in the blast furnace 1. At this time, sensors may be installed in different positions for the same type of input data, to obtain position-dependent data.

The input data group and the output data group, these being actual values, are input to the artificial intellectual model as training data. Subsequently, the artificial intellectual model is trained by the input data group to predict the temperature data of the molten iron F posterior to the reference time. Specifically, an estimate model for predicting the temperature data of the molten iron F is constructed. For construction of the estimate model, a well-known estimate technique related to machine learning (AI) can be used. Specifically, a construction means learns a correlation between the input data group and the output data group by using the input data group and the output data group, to construct the estimate model. Among others, it is preferred to employ deep learning using a multi-layer structure neural network as the machine learning.

In the method for producing pig iron, the input data group obtained in the obtaining step described later, and actual values of the output data group corresponding to the input data group are used for input in the training step. By carrying out prediction by using the artificial intelligence model trained beforehand and continuously training by using the input data group and the output data group successively generated by operation of the blast furnace 1, the prediction accuracy of the artificial intelligence model can be increased.

(Obtaining Step)

In the obtaining step, the input data group is obtained with a current time as the reference time. Specifically, the input data group can be obtained by using the same method as the method of obtaining the input data group used in the training step, for example the same sensor.

(Input Step)

In the input step, the input data group obtained in the obtaining step is input to the trained artificial intelligence model with the current time as the reference time. In the input step, due to using the artificial intelligence model with the current time as the reference time, the time posterior to the reference time is also the time posterior in the real world, and the temperature of the molten iron F predicted in the estimate step described later is the expected future temperature to come.

(Estimate Step)

In the estimate step, the trained artificial intelligence model is caused to estimate a future temperature of the molten iron F. Since the artificial intelligence model is a trained model, the future temperature of the molten iron F can be estimated highly accurately.

(Control Step)

In the control step, a configured value of an item included in the input data group is changed on the basis of the temperature of the molten iron F estimated in the estimate step. Especially in the method for producing pig iron, when the ratio R is too great, the temperature of the molten iron may be decreased, leading to cooling. Therefore, it is difficult to estimate and appropriately control the future temperature of the molten iron F to avoid cooling.

Specifically, in the estimate step, in the case in which reduction in the temperature of the molten iron F is predicted, control can be carried out by causing the artificial intelligence model to estimate parameters which enable effective avoidance of a decrease in the temperature of the molten iron F (cooling) on the basis of, for example, the temperature, the volume, and the moisture of the hot air, the coke rate, the coal fine powder rate, the rate R, and the like. It is particularly preferred to perform the controlling such that the rate R is not increased too much.

Note that the control step is not an essential step and may be omitted. In this case, the artificial intelligence model carries out only the estimate of the temperature of the molten iron F. And then, an operator considers and executes a specific measure on the basis of a result of the estimate.

<Advantages>

In the method for producing pig iron, due to thus estimating the temperature of the molten iron F by using the trained artificial intelligence model, and additionally training using the input data group obtained in the obtaining and the actual values of the output data group corresponding to the input data group, the temperature of the molten iron F can be managed with high accuracy on the basis of the ratio R. Consequently, the operation of the blast furnace can be stably continued.

[Other Embodiments]

The present invention is not in any way limited to the above described embodiments.

In the above-described embodiment, the method for producing pig iron may include other steps. For example, the method for producing pig iron may include a step of finely pulverizing powder derived from the reduced iron molded product and coal. In this case, it is preferred that the fine powder obtained by the fine pulverizing step is included as the auxiliary reductant. A part of the reduced iron molded product is pulverized into powder due to a conveying process and the like. Such powder lowers gas permeability in the blast furnace, and is not appropriate for use in the first layer. In addition, the powder has a large specific surface area, and is thus re-oxidized into iron oxide. Injecting the auxiliary reductant containing the iron oxide from the tuyere enables improvement of gas permeability. Consequently, by finely pulverizing powder derived from the reduced iron molded product together with coal and using fine powder obtained by finely pulverizing the powder and the coal as the auxiliary reductant to be injected from the tuyere, the reduced iron molded product can be effectively used and gas permeability in the blast furnace can be improved.

Although the case of employing the bell-armor type as the stacking step according to the above-described embodiment has been described, other types may also be employed. The other types include a bell-less type. With the bell-less type, stacking can be carried out by using a swivel chute and adjusting the angle thereof. In this case, the central portion charging step may also be carried out continuously before and after stacking of the second layer. For example, a method of continuously carrying out the central portion charging step by gradually increasing the amount of the coke toward the central portion during stacking of the second layer, a method of gradually decreasing the amount of the coke following the central portion charging step to continuously stack the second layer, and the like may be employed.

The case of using the input data group obtained in the obtaining step and the actual values of the output data group corresponding to the input data group for input in the training step has been described in the second embodiment; however, a configuration of not using these actual values for input in the training step may also be employed. In other words, the artificial intelligence model constructed in the training step can be continuously used without additional training.

In addition, it has been described in the second embodiment that it is preferred that the ratio R is controlled not to be too high in the control step. Although in the control step, a method for performing the controlling on the basis of the future temperature of the molten iron F estimated in the estimate step has been described, the control may be based on another parameter, for example the real-time temperature of the molten iron F. In other words, the method for producing pig iron may be provided with a control step of controlling the rate R to avoid a decrease in the temperature of the molten iron. The control step can suppress a negative effect of increasing the rate R too much.

[EXAMPLES]

Hereinafter, the embodiments of the present invention will be explained in detail by way of Examples; however, the present invention is not limited to these Examples.

<Rate R>

By using operation data of a blast furnace in operation, a relationship between the rate R of the mass of the coke (ton/ch) accumulated in the central portion to the mass of the iron ore material (ton/ch) in one charge in the blast furnace and a total K value was studied.

The total K value is represented by the following formula 2, where $P_1$ is a furnace top pressure (kPa), $P_2$ is a

blast pressure (kPa), and BOSH is a bosh gas volume (Nm$^3$/min). The K value being lower indicates higher gas permeability and conversely enables operation with the decreased coke rate.

[Math. 1]

$$K = \frac{(\frac{P_2}{98}+1.033)^2-(\frac{P_1}{98}+1.033)^2}{BOSH^{1.7}} \times 10^6 \quad \cdots 2$$

Between the total K value and the lump coke rate, there is the following relationship.

$$\text{Total K value} = -0.0042 \times \text{Lump coke rate} + 3.8054 \dots 3$$

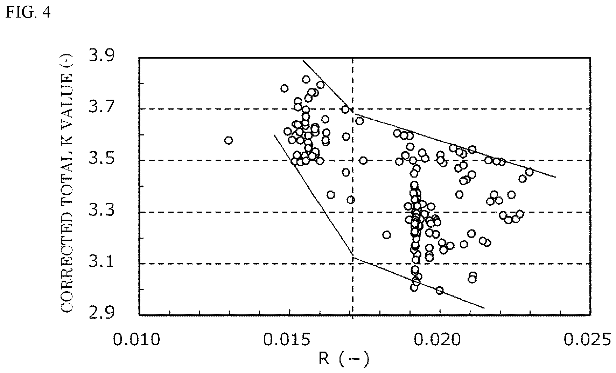

According to the formula 3, the total K value was corrected (corrected total K value) to a value of when the lump coke rate is 270 kg/tp, and a relationship between the corrected total K value and the rate R was obtained. The results are shown in FIG. 4. Note that the "lump coke" refers to oversize coke having a large grain size and having the purpose of ensuring gas permeability.

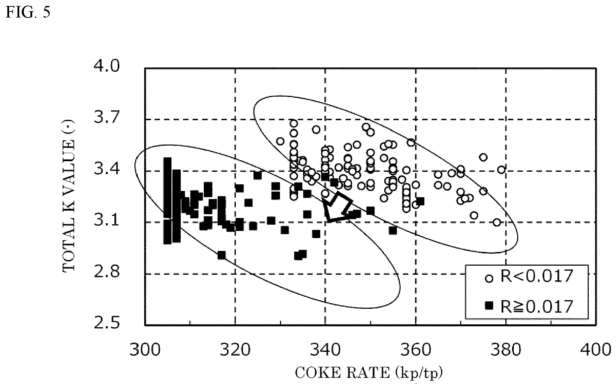

The results in FIG. 4 show that when the rate R was increased, the corrected total K value was decreased; particularly when the rate R was greater than the predetermined value $\alpha$ = 0.017, the corrected K value was small. Given this, each piece of the operation data was classified into the case of R < 0.017 and the case of R $\geq$ 0.017, and a relationship between the coke rate and the total K value was plotted. The results are shown in FIG. 5.

FIG. 5 shows that when R $\geq$ 0.017, the total K value was decreased and the gas permeability was improved. Therefore, the coke ratio can be decreased until the total K value reaches an operational upper limit value.

<Relationship with Proportion P of Iron Ore Pellets>

First, an experiment was conducted regarding an influence of the proportion P of the iron ore pellets on the ore inclined angle $\theta$.

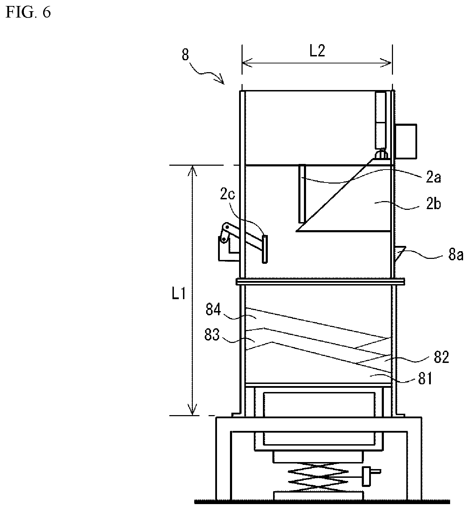

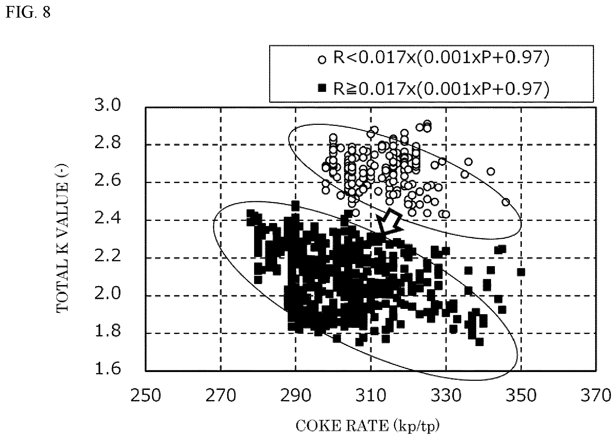

FIG. 6 illustrates a blast furnace burden distribution experiment device 8 used in this experiment. The blast furnace burden distribution experiment device 8 illustrated in FIG. 6 is a two-dimensional slice cold model simulating the bell-armor type raw material charging device on a scale of 1/10.7. The size of the blast furnace burden distribution experiment device 8 is 1,450 mm in height (length of L1 in FIG. 8), 580 mm in width (length of L2 in FIG. 8), and 100 mm in depth (length in the perpendicular direction with respect to the sheet surface of FIG. 8).

Each constitutive element of the blast furnace burden distribution experiment device 8 is denoted by the same number as the corresponding constitutive element having the same function of the bell-armor type raw material charging device 2 illustrated in FIG. 2. Since the function is the same, detailed description thereof is omitted. In addition, as illustrated in FIG. 6, the blast furnace burden distribution experiment device 8 includes a center charging chute 8a simulating center charging, for charging the coke.

A coke layer 81 as a base, a center charged coke layer 82, and an iron ore layer 83 were sequentially charged to the blast furnace burden distribution experiment device 8, and then an experimental layer 84, which is an iron ore layer, was charged.

Raw materials used for charging the experimental layer 84 were: sintered iron ore simulating sintered iron ore and lump iron ore (2.8 to 4.0 mm in grain size); alumina balls simulating the iron ore pellets (2 mm in diameter); and coke simulating lump coke (8.0 to 9.5 mm in grain size). The raw materials were on a scale of 2/11.2.

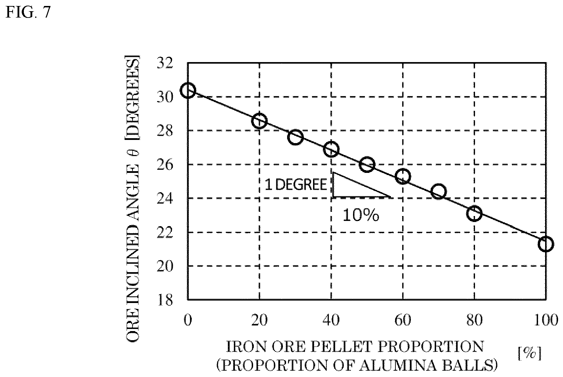

Under the aforementioned conditions, the ore inclined angle $\theta$ was measured with varied proportions of the alumina balls simulating the iron ore pellets. Note that a target range of the ore inclined angle $\theta$ was greater than or equal to 0.32 and less than or equal to 0.71 in dimensionless radius (furnace wall side = 0.00, center side = 1.00). The results are shown in FIG. 7.

From the results shown in FIG. 7, a trend has been confirmed that when the percentage of the iron ore pellets (proportion of the alumina balls) is increased by 10%, the ore inclined angle $\theta$ is lowered by 1 degree.

Next, by using the operation data of the blast furnace in operation, each piece of the operation data was classified into the case of R < 0.017 $\times$ (0.001 $\times$ P + 0.97) and the case of R $\geq$ 0.017 $\times$ (0.001 $\times$ P + 0.97), and a relationship between the coke rate and the total K value was plotted. The results are shown in FIG. 8.

Results in FIG. 8 show that an effect of improving the gas permeability can be determined highly accurately by considering the proportion P of the iron ore pellets.

[INDUSTRIAL APPLICABILITY]

By employing the method for producing pig iron according to the present invention, a further decrease in the amount of the coke used is enabled while a flow of hot air in the central portion of the blast furnace is ensured.

Explanation of the Reference Symbols

1 Blast furnace
1a Tuyere
1b Taphole
2 Raw material charging device
2a Bell cup
2b Lower bell
2c Armor
10 First layer
11 Iron ore material
11a Aggregate
11b Iron ore material excluding aggregate
12 Dripping slag
20 Second layer
21 Coke
30 Center charged column
31 Coke
8 Blast furnace burden distribution experiment device
8a Center charging chute
81 Coke layer
82 Center charged coke layer
83 Iron ore layer
84 Experimental layer
A Raceway
B Deadman
C Dripping zone
D Cohesive zone
E Lumpy zone
F Molten iron
G Molten slag
M Central portion

**Claims**

1.   A method for producing pig iron using a blast furnace comprising a tuyere, the method comprising:

stacking a first layer comprising an iron ore material and a second layer comprising coke alternately in the blast furnace;
charging the coke to a central portion of the blast furnace; and
reducing and melting the iron ore material in the stacked first layer while injecting an auxiliary reductant into the blast furnace by hot air blown from the tuyere, wherein:
in the stacking, the charging of the coke is carried out once or a plurality of times during one charge of stacking a stacking unit composed of one of the first layer and one of the second layer; and
a ratio R of a mass (ton/ch) of the coke accumulated in the central portion to a mass (ton/ch) of the iron ore material charged in the one charge is greater than or equal to a predetermined value $\alpha$.

2.   The method for producing pig iron according to claim 1, wherein the predetermined value $\alpha$ is 0.017.

3.   The method for producing pig iron according to claim 1, wherein:

the iron ore material in the first layer comprises iron ore pellets; and

when a proportion of the iron ore pellets in the iron ore material in the first layer is P (% by mass), the predetermined value α is calculated by following equation 1:

$$\alpha = 0.017 \times (0.001 \times P + 0.97) \dots 1.$$

4. The method for producing pig iron according to claim 1, 2, or 3, wherein strength of the coke accumulated in the central portion is greater than or equal to strength of the coke comprised in the second layer.

5. The method for producing pig iron according to claim 1, 2, or 3, wherein an average grain size of the coke accumulated in the central portion is greater than or equal to an average grain size of the coke comprised in the second layer.

6. The method for producing pig iron according to claim 1, 2, or 3, further comprising:

inputting, as training data, actual values of an input data group comprising at least a temperature and a volume of the hot air, a solution loss reaction amount, a furnace wall heat removal amount, a remaining pig iron amount, a temperature of molten iron, and the ratio R in a predetermined period between a time prior to a reference time and the reference time, and of an output data group comprising temperature data of molten iron obtained in the reducing and melting at a time posterior to the reference time, and training an artificial intelligence model to predict temperature data of the molten iron at a time posterior to the reference time from the input data group;
obtaining the input data group with a current time as the reference time;
inputting the input data group obtained in the obtaining to the trained artificial intelligence model with the current time as the reference time; and
causing the trained artificial intelligence model to estimate a future temperature of the molten iron,

wherein:
the input data group obtained in the obtaining, and actual values of the output data group corresponding to the input data group are used for input in the training.

FIG. 1

```
                        ┌─────────┐
                        │  START  │
                        └────┬────┘
                 ┌───────────┴───────────┐
                 │                       │
                 ▼                       ▼
       ┌───────────────────┐   ┌───────────────────┐
   S1  │  STACKING STEP    │   │ CENTRAL PORTION   │  S2
       │                   │   │  CHARGING STEP    │
       └─────────┬─────────┘   └─────────┬─────────┘
                 │                       │
                 └───────────┬───────────┘
                             ▼
                   ┌───────────────────────┐
              S3   │ REDUCING/MELTING STEP  │
                   └───────────┬───────────┘
                               ▼
                          ┌─────────┐
                          │   END   │
                          └─────────┘
```

FIG. 2

FIG. 3

FIG. 4

FIG. 5

FIG. 6

FIG. 7

FIG. 8

## INTERNATIONAL SEARCH REPORT

| International application No. |
|---|
| **PCT/JP2021/017806** |

**A. CLASSIFICATION OF SUBJECT MATTER**

***C21B 5/00***(2006.01)i
FI: C21B5/00 311

According to International Patent Classification (IPC) or to both national classification and IPC

**B. FIELDS SEARCHED**

Minimum documentation searched (classification system followed by classification symbols)

C21B5/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-127628 A (KOBE STEEL LTD) 01 August 2019 (2019-08-01) entire text, all drawings | 1-6 |
| A | JP 1-290709 A (SUMITOMO METAL IND LTD) 22 November 1989 (1989-11-22) entire text, all drawings | 1-6 |
| A | JP 11-286706 A (NIPPON STEEL CORP) 19 October 1999 (1999-10-19) entire text, all drawings | 1-6 |
| A | JP 10-088208 A (SUMITOMO METAL IND LTD) 07 April 1998 (1998-04-07) entire text, all drawings | 1-6 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 June 2021** | **06 July 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/017806**

| Patent document cited in search report | | | Publication date (day/month/year) | Patent family member(s) | Publication date (day/month/year) |
|---|---|---|---|---|---|
| JP | 2019-127628 | A | 01 August 2019 | (Family: none) | |
| JP | 1-290709 | A | 22 November 1989 | (Family: none) | |
| JP | 11-286706 | A | 19 October 1999 | (Family: none) | |
| JP | 10-088208 | A | 07 April 1998 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6056003 A